(19) Europäisches Patentamt
European Patent Office
Office européen des brevets

(11) **EP 4 660 160 A1**

(12) **EUROPÄISCHE PATENTANMELDUNG**

(43) Veröffentlichungstag:
**10.12.2025 Patentblatt 2025/50**

(21) Anmeldenummer: **24180448.3**

(22) Anmeldetag: **06.06.2024**

(51) Internationale Patentklassifikation (IPC):
***C03B 37/012*** *(2006.01)* ***C03B 37/025*** *(2006.01)*
***C03B 37/027*** *(2006.01)*

(52) Gemeinsame Patentklassifikation (CPC):
**C03B 37/02781; C03B 37/0122; C03B 37/0124;**
**C03B 37/0253;** C03B 2203/14; C03B 2203/16;
C03B 2203/42; C03B 2205/10

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Heraeus Quarzglas GmbH & Co. KG**
**63450 Hanau (DE)**

(72) Erfinder:
• **Vydra, Jan**
**63450 Hanau (DE)**
• **Schuster, Kay**
**63450 Hanau (DE)**
• **Rosenberger, Manuel**
**63450 Hanau (DE)**

(74) Vertreter: **Heraeus IP**
**Heraeus Business Solutions GmbH**
**Intellectual Property**
**Heraeusstraße 12-14**
**63450 Hanau (DE)**

(54) **VERFAHREN UND VORFORM FÜR DIE HERSTELLUNG EINER HOHLKERNFASER SOWIE VERFAHREN ZUR HERSTELLUNG EINER VORFORM FÜR EINE HOHLKERNFASER**

(57) Es ist bekannt, antiresonante Hohlkernfasern aus Vorformen zu ziehen, die einen hohlen Kernbereich und einen Mantelbereich aufweist, der von Hohlkanälen durchzogen ist, die sich zwischen einem ersten Vorform-Ende und einem zweiten Vorform-Ende erstrecken. Dabei wird die Vorform mit dem ersten Ende beginnend einer Heizeinrichtung zugeführt, darin bereichsweise erweicht, und aus dem erweichten Bereich unter Verkürzung einer Vorform-Restlänge die Hohlkernfaser kontinuierlich abgezogen wird. Um das Kollabieren der Hohlkanäle der Querschnittsstruktur beim Faserziehprozess zu verhindern, werden diese in der Regel mit einem Überdruck beaufschlagt. Um hiervon ausgehend ein Verfahren zur Herstellung einer antiresonanten Hohlkernfaser durch Ziehen aus einer Vorform anzugeben, bei dem gewährleistet ist, dass die Hohlkanäle der Querschnittsstruktur während des Faserziehprozess zuverlässig und reproduzierbar mit einem Überdruck beaufschlagt werden können, wird vorgeschlagen, dass mindestens ein Mittel zur Druck-Beaufschlagung am zweiten Vorform-Ende angeordnet ist, und dass das thermische Strecken beendet wird, sobald das Mittel zur Druck-Beaufschlagung und/oder das zweite Vorform-Ende eine vorgegebene Grenztemperatur erreicht hat und/oder die Vorform-Restlänge eine vorgegebene Mindestlänge unterschritten hat.

**Beschreibung**

Technischer Hintergrund

Die Erfindung liegt auf dem Gebiet der optischen Fasertechnologie und dabei insbesondere im Bereich der antiresonanten Hohlkernfasern (englisch: "antiresonant hollow-core fibers"- kurz: AR-HCF). Der hohle Kernbereich ist von einem mikrostrukturierten Mantel umgeben, in dem sogenannte "antiresonante Elemente" (oder "Antiresonanzelemente"; kurz: "AREs") angeordnet sind. Diese bilden in der Regel Hohlkanäle, die durch Glasmembranen voneinander getrennt sind. Die um den Hohlkern angeordneten Glasmembranen können das auftreffende Licht reflektieren und dadurch durch den Faserkern leiten. Hohlkernfasern ermöglichen daher die Lichtführung in einem "hohlen" Kern, der entweder evakuiert oder mit einem Gas (zum Beispiel Luft) gefüllt ist.

Diese Fasertechnologie verspricht eine niedrige optische Dämpfung, ein sehr breites Transmissionsspektrum (auch im UV- oder IR-Wellenlängenbereich) und eine geringe Latenzzeit bei der Datenübertragung. Darüber hinaus eignen sich diese Fasern für spektroskopische Anwendungen sowie zur Übertragung von kurzen Laserpulsen zur Hochleistungsstrahlführung, beispielsweise zur Materialbearbeitung, der Modalfilterung, der nichtlinearen Optik, insbesondere zur Superkontinuumserzeugung, vom ultravioletten bis infraroten Wellenlängenbereich.

Insbesondere betrifft die Erfindung eine Vorform für eine antiresonante Hohlkernfaser, die einen sich entlang einer Faser-Längsachse erstreckenden Hohlkern und einen den Hohlkern umgebenden mikrostrukturierten Mantelbereich aufweist.

Außerdem betrifft die Erfindung ein Verfahren zur Herstellung einer Vorform für eine antiresonante Hohlkernfaser, die einen sich entlang einer Faser-Längsachse erstreckenden Hohlkern und einen den Hohlkern umgebenden mikrostrukturierten Mantelbereich aufweist, sowie ein Verfahren zur Herstellung einer derartigen antiresonanten Hohlkernfaser durch Ziehen aus einer Vorform.

Stand der Technik

Es ist bekannt, antiresonante Hohlkernfasern aus Vorformen zu ziehen, die einen hohlen Kern haben, der von einem Mantel umgeben ist, in dem mindestens einige der AREs als eine von Hohlkanälen durchzogene Querschnittsstruktur angelegt sind.

Die Vorform wird beispielsweise durch Kollabieren und/oder Elongieren eines zylinderförmigen Vorprodukts erzeugt, das dabei mit zusätzlichem Mantelmaterial überfangen werden kann. Das zylinderförmige Vorprodukt ist beispielsweise ein Ensemble, das sich aus einem Hüllrohr und einer Vielzahl zylinderförmiger Ausgangskomponenten zusammensetzt, oder es ist ein massiver Hohlzylinder, der den Hohlkern und den von Hohlkanälen durchzogenen Mantel umfasst, und der im Folgenden auch als "Kernvorform" (engl.: cane) bezeichnet wird. Die Kernvorform kann durch Kollabieren und/oder Elongieren derartiger zylinderförmiger Ausgangskomponenten in einem Hüllrohr erhalten werden, wobei auch bereits in diesem Verfahrensschritt durch Überfangen mit einem Überfangzylinder zusätzliches Mantelmaterial aufkollabiert werden kann. Ausgangskomponenten des Vorprodukts, die in der Vorform die von Hohlkanälen durchzogene Querschnittsstruktur und in der fertigen Hohlkernfaser die AREs bilden, werden im Folgenden auch als "ARE-Vorformlinge" bezeichnet.

Ein Vorprodukt für eine Hohlkernfaser mit dem sogenannten NANF-Design (englisch: Nested Antiresonant Nodeless Hollow Core Fibers) enthält mehrere ARE-Vorformlinge, im einfachsten Fall jeweils bestehend aus einem Außenrohr (im Folgenden auch "Primärrohr" genannt) und einem Innenrohr (im Folgenden auch "Sekundärrohr" genannt), das an der Innenseite des Primärrohres angeordnet ist.

Bei einem als DNANF-Design (englisch: Double Nested Antiresonant Nodeless Hollow Core Fibers) ist im Sekundärrohr jeweils ein weiteres Innenrohr angeordnet, das auch als "Tertiärrohr" bezeichnet werden kann. Die Sekundär- und Tertiärrohre bilden in der Hohlkernfaser zusätzliche Hohlkanäle, die zu einer Verringerung der optischen Faserdämpfung beitragen, indem sie zu mehrfachen radialen Reflexionen führen und Übergänge oder Knotenpunkte vermeiden, die zu Resonanzen führen.

Beim sogenannten "ALIF-Design" (englisch: "Antiresonant Leakage Inhibited Fibers") ist an der Innenseite des Primärrohres ein Paar von Sekundärrohren eingesetzt, die voneinander beabstandet sind und an azimutalen Stellen um den Umfang des Primärrohes befestigt sind, die beide zum peripheren Kontaktpunkt des Primärrohres am Hüllrohr versetzt sind. Zwischen jedem Sekundärrohr-Paar ist somit ein in radialer Richtung offener Spalt vorhanden.

Polarisationserhaltende Hohlkernfasern enthalten AREs, bei denen die Anordnung der Primärrohre und Sekundärrohre beziehungsweise der daraus erzeugten Hohlkanäle eine Asymmetrie aufweist, die zu einer bevorzugten Leitung von Licht einer Polarisation bewirkt.

Beim Faserziehprozess wird die Vorform zur Hohlkernfaser "elongiert" oder "thermisch gestreckt". Das "Streckverhältnis" oder "Ausziehverhältnis" ist das Verhältnis zwischen dem Außendurchmesser oder der Querschnittsfläche der Vorform und dem Außendurchmesser oder der Querschnittsfläche der Hohlkernfaser. Dabei wird die Vorform mit einem Ende beginnend und mit einer Vorschubgeschwindigkeit einer Heizeinrichtung zugeführt, darin das Glas bereichsweise erweicht, und aus dem erweichten Glasvolumen wird die Hohlkernfaser unter Ausbildung einer Verformungszone, die auch als "Ziehzwiebel" bezeichnet wird, kontinuierlich und mit einer Abzugsgeschwindigkeit in Ziehrichtung abgezogen. Die Ziehrichtung kann jede Orientierung im Raum haben; üblicherweise verläuft sie in vertikaler Richtung.

Im Hinblick auf einen möglichst effizienten Faserziehprozess wird grundsätzlich angestrebt, aus einer einzelnen Vorform eine möglichst große Faserlänge zu erzielen. Dies wird durch den Einsatz großvolumiger Vorformen erreicht, so dass ein größeres Ausgangsvolumen an Glas für die Umwandlung in Fasern zur Verfügung steht. Eine Volumenvergrößerung kann durch Vergrößerung der Vorform-Länge und/oder des Vorform-Durchmessers erreicht werden.

Bei einem aus der WO 2024/015191 A1 bekannten Ansatz wird eine zwar dünne, aber dafür sehr lange Vorform eingesetzt. Die Vorform liegt beispielsweise in Form eines langgestreckten Filaments mit einem Außendurchmesser im Bereich von 0,5 bis 5mm und einer Gesamtlänge von mindestens 30m vor und kann beim Faserziehprozess kontinuierlich von einer Spule abgewickelt werden. Die Heizeinrichtung ist zweistufig mit zwei in Ziehrichtung hintereinander angeordneten Heizzonen. In der oberen Heizzone wird die Vorform zu einer Zwischen-Vorform elongiert und aus dieser in der unteren Heizzone die endgültige Hohlkernfaser gezogen. Die Vorform soll möglichst vollständig ausgezogen werden soll, wobei das Gesamt-Ausziehverhältnis im Bereich von 2 bis 150 liegt.

Ein anderes Konzept ist aus der EP 3 766 844 A1 bekannt. Dabei wird eine antiresonante Hohlkernfaser aus einer relativ dickwandigen Vorform gezogen, die einen Außendurchmesser im Bereich von 30 bis 90mm hat. Beim Faserziehprozess wird die Vorform bei vertikal orientierter Längsachse von oben kommend einer temperaturgeregelten Heizzone zugeführt und darin mit dem unteren Ende beginnend zonenweise erweicht. Dabei wird dem Kernbereich (Hohlkern) Gas zugeführt, so dass sich in den Hohlkanälen im Kernbereich ein Innenüberdruck einstellt.

## Technische Aufgabenstellung

Zur Einhaltung der Resonanz- beziehungsweise Antiresonanzbedingungen sind bereits geringe Maßabweichungen in der Größenordnung der Arbeitswellenlänge des zu führenden Lichts nicht tolerierbar. Daher stellt die maßgenaue Herstellung der komplexen Querschnittsstrukturen der Hohlkernfaser grundsätzlich eine hohe Herausforderung dar. Maßabweichungen können durch ungewollte Verformungen beim Faserziehprozess auftreten und sie können bereits in der Faser-Vorform angelegt sein, und zwar insbesondere infolge von Abweichungen in der Wandstärke der Wandungen von ARE-Vorformlingen und in ihrer azimutalen Position, die beispielsweise durch Biegungen während der Vorform-Herstellung verursacht werden können.

Die Querschnittsstruktur der Hohlkernfaser kann sich von derjenigen der Vorform unterscheiden. Um die Durchmesser der Hohlkanäle und die Wanddicke der Glasmembranen zwischen den Hohlkanälen präzise einstellen zu können, ist es erforderlich, während des Ziehens der Hohlkernfaser die Hohlkanäle der Vorform beziehungsweise die ARE-Vorformlinge mit einem Überdruck zu beaufschlagen. Die Druckbeaufschlagung wirkt der Oberflächenspannung des erweichten Materials entgegen, die andernfalls zum Kollabieren der Hohlkanäle und zur Zerstörung der vorgesehenen Querschnittsstruktur führen würde.

Für die Druckbeaufschlagung erfolgt häufig differenziell in dem Sinne, dass unterschiedliche Drücke an den Hohlkern und an verschiedene Hohlkanäle angelegt werden. Daher ist häufig die Anbindung eines komplexen Drucksystems an die Vorform erforderlich, das individuelle Abdichtungen erfordert. Zum Abdichten des Drucksystems können Dichtungsteile aus Kunststoffen eingesetzt werden, von denen jedoch viele bei hohen Temperaturen degradieren. Polymide sind zwar temperaturstabiler, jedoch zu hart und eignen sich daher schlecht zur Abdichtung. Daher sollte während des Faserziehprozesses die Temperatur am oberen Vorform-Ende, an dem die Druckanbindung erfolgt, auf einer Temperatur gehalten werden, die eine Degradierung des Drucksystems verhindert. Dieses Vorform-Ende wird im Folgenden auch als "Konnektierungsende" bezeichnet.

Ein Ziel der Erfindung ist es daher, ein Verfahren zur Herstellung einer antiresonanten Hohlkernfaser durch Ziehen aus einer Vorform anzugeben, bei dem gewährleistet ist, dass die Hohlkanäle der Querschnittsstruktur während des Faserziehprozess zuverlässig und reproduzierbar mit einem Überdruck beaufschlagt werden.

Darüber hinaus liegt der Erfindung die Aufgabe zugrunde, eine Vorform bereitzustellen, die sich durch hohe Maßhaltigkeit und Genauigkeit ihrer Querschnittsstruktur auszeichnet und die zur Durchführung des Faserziehverfahrens besonders geeignet ist.

Außerdem ist es ein Ziel der Erfindung, ein Verfahren anzugeben, das eine möglichst maßgenaue Herstellung einer derartigen Vorform ermöglicht.

## Zusammenfassung der Erfindung

Hinsichtlich der Vorform zur Herstellung der antiresonanten Hohlkernfaser wird diese Aufgabe durch eine Vorform mit den Merkmalen von Anspruch 1 gelöst. Vorteilhafte Ausgestaltungen der Vorform sind in den abhängigen Ansprüchen angegeben.

Aus der Vorform wird eine Hohlkernfaser anhand eines Faserziehverfahrens erzeugt, das in Anspruch 10 angegeben ist. Dieses Verfahren löst die oben angegebene technische Aufgabe hinsichtlich der Herstellung der Hohlkernfaser.

Bei diesem Herstellungsverfahren spielen konstruktive Aspekte der Vorform und Verfahrens-Merkmale des Faserziehprozesses ineinander, so dass im Folgenden diese Aspekte und Merkmale gemeinsam betrachtet und erläutert werden.

Beim Faserziehprozess soll zum einen eine übermäßige Temperaturerhöhung am Konnektierungsende der Vorform (also an der Anbindungsstelle für die Druckbeaufschlagung der Hohlkanäle der Querschnittsstruktur) verhindert werden.

Die Erwärmung der Vorform in der Heizzone erfolgt von außen nach innen. Dabei stellt sich innerhalb der Vorform ein radialer Temperaturgradient von außen (heiß) nach innen (kalt) ein. Der Temperaturgradient innerhalb der Vorform hängt unter anderem vom Außendurchmesser der Vorform und von deren Aufenthaltsdauer in der Heizzone ab, die wiederum von der relativen Vorschubgeschwindigkeit der Vorform in die Heizzone und deren Länge bestimmt wird.

Der Faserziehprozess erfordert, dass die gesamte Querschnittsstruktur der Vorform eine hinreichend niedrige Viskosität hat, also nicht nur der äußere Mantelbereich, sondern auch der von Hohlkanälen durchzogene innere Mantelbereich der Vorform. Das bedeutet, dass im inneren Mantelbereich der Vorform eine Mindesttemperatur $T_{min}$ erreicht werden muss, die so hoch ist, dass bei der gegebenen Aufenthaltsdauer in der Heizzone ein hinreichend viskoses Fließverhalten gewährleistet ist. Aufgrund des nach innen abfallenden Temperaturprofils ist die Temperatur im äußeren Mantelbereich in jedem Fall höher als $T_{min}$ und wird im Folgenden bezeichnet als $T_{min+}$. Bei gegebenem Temperaturgradienten hängt die Differenz zwischen $T_{min+}$ und $T_{min}$ von der Dicke der Wandung der Vorform und damit vom Vorform-Außendurchmesser ab. Je größer der Vorform-Außendurchmesser ist, umso größer ist die Temperaturdifferenz und umso höher ist $T_{min+}$.

Somit mag es zwar aus Effizienzüberlegungen zweckdienlich sein, die Vorform mit möglichst großem Außendurchmesser auszustatten. Jedoch besteht bei sehr dickwandigen Vorformen mit großem Außendurchmesser die Gefahr, dass $T_{min+}$ so hoch sein muss, dass sich im Bereich der Anbindungsstelle für die Druckbeaufschlagung dauerhaft eine Temperatur oberhalb einer vorgegebenen Grenztemperatur von beispielsweise 250°C - bevorzugt 200°C - einstellt.

Um dem entgegenzuwirken, schlägt die Erfindung einerseits vor, dass der Vorform-Außendurchmesser OD mindestens 25mm beträgt, der der zusätzlichen Maßgabe, dass das Verhältnis L/OD größer ist als 71,5.

Der Vorform-Außendurchmesser OD ist vorzugsweise nicht größer als 50mm, vorzugsweise nicht größer als 45mm. Und besonders bevorzugt ist der Außendurchmesser OD kleiner als 30mm.

Die Vorformen haben somit einen kleinen bis mittelgroßen Außendurchmesser, was dem Entstehen eines großen radialen Temperaturgradienten beim thermischen Strecken entgegenwirkt. Bei einem Außendurchmesser von weniger als 25mm erfüllt die Vorform das Effizienz-Kriterium allerdings nicht mehr.

Vorformen mit Außendurchmessern von mehr als 25mm haben jedoch trotzdem eine vergleichsweise große Querschnittsfläche, durch die Wärme von der Heizzone zum Konnektierungsende transportiert wird. Das hat wiederum zur Folge, dass sich das Konnektierungsende im Verlauf des Faserziehprozesses immer weiter erwärmt und schließlich eine so hohe Temperatur hat, dass die dort angeordneten Druck- und Dichtungsteile zerstört werden können.

Um dem entgegenzuwirken, schlägt die Erfindung andererseits vor, dass das Verhältnis L/OD größer ist als 71,5. Bevorzugt ist das Verhältnis D/L kleiner als 500und nimmt vorzugsweise einen Wert im Bereich zwischen 80 und 200 und besonders bevorzugt im Bereich zwischen 90 und 150 ein. Das Verhältnis L/OD bestimmt eine Mindestlänge der Vorform in Abhängigkeit von ihrem Außendurchmesser. Bei einem minimalen Außendurchmesser von 25mm beträgt die Mindestlänge der Vorform beispielsweise 1,788m Dies ist eine vergleichsweise große Vorform-Länge. Vorzugsweise hat die Vorform eine Länge L von mindestens 3m, bevorzugt mindestens 4m.

Bestimmte Wärmemanagement-Maßnahmen können mit langen Vorformen (bei gleichem Gewicht) effizienter durchgeführt werden, wie beispielsweise Wärmemanagement-Maßnahmen zur besseren Abstrahlung von Wärme durch Streuung, etwa durch Aufrauen eines Teils der Außenoberfläche der Vorform.

Außerdem vereinfacht es die große Vorform-Länge es, das Konnektierungsende der Vorform beziehungsweise das Mittel zur Druck-Beaufschlagung genügend weit entfernt von der Heizzone zu halten, indem der Faserziehprozess beendet wird, bevor die Temperatur am Konnektierungsende und/oder das Mittel zur Druck-Beaufschlagung zu hoch wird, und insbesondere den Grenzwert von 200°C übersteigt.

Beim erfindungsgemäßen Verfahren wird die Vorform demnach nicht vollständig zur Hohlkernfaser elongiert, sondern der Faserziehprozess wird spätestens dann beendet, wenn /oder die Vorform-Restlänge eine vorgegebene Mindestlänge unterschritten hat und/oder wenn die Temperatur am Konnektierungsende den Temperatur-Grenzwert übersteigt, wobei der Eintritt dieser Bedingung entweder durch Messung der Temperatur, Empirie oder durch Berechnung oder modellbasierte Prädiktion festgestellt werden kann.

Die transportierte Wärmeleistung ist umgekehrt proportional zur Länge L und direkt proportional zur materialbelegten Querschnittsfläche CSA der Vorform.

$$P_Q = lambda*A/L*(T1-T2) \qquad (1)$$

$P_Q$ =         transportierte Wärmeleistung
lambda =    Wärmeleitkoeffizient
CSA =       materialbelegte Querschnittsfläche der Vorform
L =         Länge der Vorform
T1 =        Temperatur in der Heizzone
T2 =        Temperatur am Konnektierungsende

Die Länge L repräsentiert beispielsweise den Vorform-Längenabschnitt zwischen der Heizzone und dem Konnektierungsende oder die "Restlänge" der Vorform. Damit ist aus Gleichung (1) abzuleiten, dass dickere Vorformen bei gleicher eingekoppelter Leistung eine größere Restlänge aufweisen müssen, um eine kritische Temperatur T2 am Konnektierungsende nicht zu überschreiten.

Mit dem Wärmeleitkoeffizienten für Quarzglas zwischen 1,38 W/mK (bei 20°C) und 15 W/mK (bei 2000°C) ergibt sich, dass das Verhältnis CSA/L kleiner als 0,00095 (in m) sein sollte. Für diese Abschätzung kann für die Berechnung von CSA ein Innendurchmesser angenommen werden, der den mit Hohlkanälen durchzogenen inneren Mantelbereich an der Vorform-Innenseite nicht berücksichtigt, , so dass der Beitrag der ARE-Vorformlinge an der materialbelegten Querschnittsfläche der Vorform vernachlässigt wird.

Die verlorene Vorform-Länge (Vorform-Restlänge $L_R$) liegt typischerweise bei weniger als 500mm, beträgt aber bevorzugt mindestens 300mm, besonders bevorzugt mindestens 400mm. In Anbetracht der großen ursprünglichen Gesamtlänge und des nur mittelgroßen Vorform-Außendurchmessers ist der Materialverlust akzeptabel. Bei einer anfänglichen Vorform-Masse von vorzugsweise mindestens 3kg macht die Restlänge allenfalls einen Bruchteil aus

Alternativ dazu könnte die Anbindungsstelle für die Druckbeaufschlagung anstelle der Vorform auch am oberen Ende eines genügend langen Haltezylinders (Dummyzlinder) vorgesehen sein, der mit dem oberen Vorformende gasdicht verbunden wird. Ein derartiger Haltezylinder müsste aber die fluidische Verbindung zu allen Hohlkanälen der Querschnittsstruktur, die sehr eng und dicht benachbart sein können, zuverlässig gewährleisten und wäre in seiner Herstellung ähnlich aufwändig wie die Vorform selbst. Daher ist diese Verfahrensalternative gegenüber der langen Vorform und der Inkaufnahme von Materialverlust nicht bevorzugt.

Die im Faserziehprozess eingesetzte Vorform hat somit eine große Länge aber nur einen mittelgroßen Außendurchmesser. Dies spiegelt sich in einem großen Verhältnis von Vorform-Länge L und Außendurchmesser OD wider, das größer ist als 71,5.

In dem Zusammenhang hat es sich auch bewährt, wenn die Vorform ein Volumen V (in mm$^3$) und eine Außenoberfläche A (in mm$^2$) aufweist, und dass Verhältnis V/A kleiner ist als 12 (in mm).

Das Verhältnis V/A kann als Maß für eine oberflächenbeeinflusste Wärmeleitung betrachtet werden. Je kleiner dieses Verhältnis ist, umso (relativ) größer ist die Oberfläche, über die potenziell eine Wärmeabstrahlung erfolgen kann. Bei gleichem Volumen können mit langen Vorformen bestimmte Wärmemanagement-Maßnahmen effizienter durchgeführt werden, die beispielsweise zur besseren Abstrahlung von Wärme durch Streuung dienen, wie etwa ein Aufrauen eines Teils der Außenoberfläche der Vorform. Auch bei dieser Abschätzung kann das Volumen näherungsweise auf das massive Glasvolumen beschränkt werden; das heißt: der Beitrag der ARE-Vorformlinge zum Glasvolumen kann vernachlässigt werden.

Beim Faserziehprozess kann es bei zu hoher Vorschubgeschwindigkeit zu radialen Temperaturgradienten in der Vorform kommen, die dazu führen können, dass die darin auf verschiedenen radialen Positionen verteilten Querschnittsstrukturen unterschiedlich gestreckt werden. Eine zu geringe Vorschubgeschwindigkeit kann zu unerwünschten Deformationen der Querschnittsstruktur führen. Als geeigneter Kompromiss hat es sich erwiesen, wenn die Zufuhrgeschwindigkeit so eingestellt wird, dass sich ein Durchsatz von mindestens 0,8 g/min, bevorzugt ein Durchsatz im Bereich von 0,8 g/min bis 150 g/min, und besonders bevorzugt ein Durchsatz im Bereich von 3,3 g/min bis 85 g/min ergeben.

Außerdem wird die Vorschubgeschwindigkeit bevorzugt so eingestellt, dass die mittlere Aufenthaltsdauer der Vorform in der Heizzone weniger als 25 min, bevorzugt im Bereich von 1,5 bis 25 min beträgt.

Zur Verminderung absoluter Geometriefehler ist ein großes Ausziehverhältnis beim Faserziehprozess erwünscht. Andererseits geht ein großes Ausziehverhältnis mit entsprechend großen Umformprozesse und Materialbewegungen einher, was leicht zu unerwünschten Deformationen bei der filigranen Querschnittsstruktur der Vorform führen kann.

Als geeigneter Kompromiss hat es sich erwiesen, wenn das Ausziehverhältnis beim Faserziehprozess im Bereich von 100 bis 200, vorzugsweise auf einen Wert im Bereich von 120 bis 180 eingestellt wird.

Hinsichtlich des Verfahrens zur Herstellung einer Vorform für eine antiresonante Hohlkernfaser wird die oben genannte technische Aufgabe durch ein Verfahren mit den Merkmalen von Anspruch 7 gelöst. Vorteilhafte Verfahrensweisen sind in den abhängigen Ansprüchen 8 bis 9 angegeben.

Die Herstellung der Vorform erfolgt durch das Strecken eines zylinderförmigen Vorprodukts, das einen größeren Außendurchmesser aber eine geringere Länge als die Vorform aufweist.

Das Vorprodukt ist beispielsweise eine Kernvorform (Cane) oder es ist ein Ensemble, das ein Hüllrohr und mehrere vom Hüllrohr umgebene ARE-Vorformlinge umfasst. Beim thermischen Strecken kann das Vorprodukt mit zusätzlichem Mantelglas überfangen werden, beispielsweise durch Aufkollabieren eines Überfangzylinders.

Unabhängig davon, ob das Vorprodukt als Kernvorform oder als Ensemble vorliegt, kommen bei seiner Herstellung zylinderförmige, vergleichsweise filigrane ARE-Vorformlinge zum Einsatz, die dabei möglichst genau auszurichten und zu positionieren sind. Diese Vorgänge werden üblicherweise bei horizontal orientierter Längsachse der ARE-Vorformlinge mit inhärenter Durchbiegung der ARE-Vorformlinge durchgeführt, aber auch bei vertikal orientierter Längsachse kann den ARE-Vorformlingen eine Biegung aufgeprägt sein, die sich ungünstig auf die Maßhaltigkeit des Vorprodukts auswirkt.

Dadurch, dass das Vorprodukt eine kurze Länge von weniger als 3000mm, bevorzugt eine Länge von weniger als 2500mm, und besonders bevorzugt eine Länge von weniger als 2000mm, aufweist, kann die absolute Biegung der eingesetzten ARE-Vorformlinge möglichst geringgehalten werden. Zudem ist eine kurze Länge der eingesetzten ARE-Vorformlinge vorteilhaft, da somit deren Steifigkeit größer ist als bei langen ARE-Vorformlingen. Das thermische Strecken des Vorprodukts zur Vorform erfolgt in einem einzigen Ausziehschritt oder es erfolgt in mehreren Ausziehschritten, besonders bevorzugt in zwei Ausziehschritten. Bei einem thermischen Strecken des Vorprodukts in mehreren Ausziehschritten ist die Querschnittsstruktur vom Vorprodukt maßgenauer und reproduzierbarer auf die Querschnittsstruktur der Vorform übertragbar.

Darüber hinaus weist das zylinderförmige Vorprodukt vorteilhafterweise einen vergleichsweise großen Außendurchmesser im Bereich von 40mm bis 200mm, bevorzugt einen Außendurchmesser von mindestens 60mm, und besonders bevorzugt von mindestens 70mm auf. Die dabei eingesetzten ARE-Vorformlinge können einen vergleichsweise großen Außendurchmesser haben, was ebenfalls deren Steifigkeit erhöht und damit die Gefahr von Biegungen vermindert.

Insgesamt ist es somit vorzuziehen, möglichst große aber kurze Vorprodukte herzustellen, da sich diese durch eine vergleichsweise bessere Maßhaltigkeit und insbesondere geringere Biegung der ARE-Vorformlinge auszeichnen. Und außerdem ist es vorteilhaft, die Vorform durch thermisches Strecken möglichst großer aber kurzer Vorprodukte zu erzeugen, da das Vorprodukt kurzer Länge eine höhere Genauigkeit hinsichtlich seiner Geometrie aufweist.

So kann beispielsweise aus einem Vorprodukt mit einem Außendurchmesser von 90mm und einer Länge von 1000mm eine Vorform mit einem Außendurchmesser von 25mm und einer Länge von über 10m hergestellt werden.

Da der Aufwand für die Herrichtung der Vorform und für die Anbindung für die Druckbeaufschlagung bei kurzen Vorformen genauso zeit- und anlagenintensiv ist, wie bei langen Vorformen, ist es aus wirtschaftlichen Gesichtspunkten sinnvoll, möglichst lange Vorformen aus dem Vorprodukt herzustellen. Beim Faserziehen einer langen Vorform kann die Anzahl der Rüstvorgänge vergleichsweise verringert und die Anlaufzeiten beim Faserziehprozess reduziert werden

Definitionen

Einzelne Verfahrensschritte und Begriffe der obigen Beschreibung werden im Folgenden ergänzend definiert. Die Definitionen sind Bestandteil der Beschreibung der Erfindung. Bei einem sachlichen Widerspruch zwischen einer der folgenden Definitionen und der übrigen Beschreibung ist das in der übrigen Beschreibung Gesagte maßgeblich.

Für Begriffe und Messverfahren, die in der Beschreibung nicht speziell definiert sind, ist die Auslegung gemäß der Internationalen Fernmeldeunion (ITU; International Telecommunication Union) maßgeblich. Sofern für einen Parameter eine Messmethode nicht angegeben ist, so ist für diesen Parameter die Standard-Messmethode anzuwenden und insbesondere diejenige Messmethode, die in der entsprechenden ISO-Vorschrift niedergelegt ist, deren Veröffentlichungsdatum am nächsten vor dem der vorliegenden Anmeldung liegt. Sollten Messbedingungen nicht angegeben sein, so gelten als Standard-Bedingungen (SATP-Bedingungen) für die Temperatur 298,15 K (25°C, 77°F) und für den absoluten Druck 100 kPa (14,504 psi, 0.986 atm).

*Antiresonanzelemente*

Antiresonanzelemente (kurz AREs) können einfache oder verschachtelte Strukturelemente der Hohlkernfaser sein. Sie haben mindestens zwei Wandungen, die aus Richtung des Hohlkerns gesehen eine negative Krümmung haben (konvex) oder keine Krümmung haben (plan, gerade). Sie bestehen in der Regel aus einem Material, das für das Arbeitslicht transparent ist, beispielsweise aus Glas, insbesondere aus dotiertem oder nicht dotiertem $SiO_2$, einem Kunststoff, insbesondere aus einem Polymer, aus einem Verbundwerkstoff oder aus kristallinem Material.

*Vorform*

Die Vorform ist dasjenige Bauteil oder Bauteil-Ensemble, aus dem die antiresonante Hohlkernfaser anhand eines Faserziehprozesses gezogen wird. Die Kern-Mantel-Querschnittsstruktur der Hohlkernfaser kann in der Vorform durch die relative Anordnung der ARE-Vorformlinge zueinander beziehungsweise der daraus erzeugten Hohlkanäle und deren Winkelverteilung bereits geometrisch angelegt sein. Häufig werden die Größenverhältnisse der Hohlkanäle beim Faserziehprozess aber noch verändert.

*Vorprodukt - Ensemble - Kernvorform*

Die Vorform wird durch einmaliges oder mehrmaliges thermisches Strecken eines Vorform-Vorprodukts erhalten. Das Vorform-Vorprodukt (kurz: Vorprodukt) ist beispielsweise ein mehr oder weniger loses Ensemble von zylinderförmigen Ausgangskomponenten (engl.: stack; hier auch als "Ensemble" oder als "primäre Vorform" bezeichnet) oder es ist ein gefügter, massiver Hohlzylinder, der den Hohlkern und mindestens den von Hohlkanälen durchzogenen Mantel umfasst (engl.: cane; hier auch als "Kernvorform" oder als "sekundäre Vorform" bezeichnet). Beim Ensemble können die zylinderförmigen Ausgangskomponenten und das Hüllrohr teilweise miteinander verschmolzen sein, insbesondere an den Hüllrohr-Enden. In der Kernvorform, die durch Kollabieren und/oder thermisches Strecken des Ensembles erhalten werden kann, sind die Ausgangskomponenten in der Regel über die gesamte Länge mit dem Hüllrohr verbunden.

Die Weiterverarbeitung des Vorform-Vorprodukts führt entweder zur Vorform oder zu einem weiteren Vorform-Vorprodukt und kann eine einmalige oder wiederholte

Durchführung von einem oder mehreren der folgenden Heißformprozesse umfassen:

(i) Thermisches Strecken,

(ii) Kollabieren,

(iii) Kollabieren und gleichzeitiges thermisches Strecken,

(iv) Aufkollabieren von zusätzlichem Mantelmaterial,

(v) Aufkollabieren von zusätzlichem Mantelmaterial und anschließendes thermisches Strecken,

(vi) Aufkollabieren von zusätzlichem Mantelmaterial und gleichzeitiges thermisches Strecken.

*Antiresonanzelement-Vorformling*

Als Antiresonanzelement-Vorformlinge werden zylinderförmige Ausgangskomponenten eines in Form eines Bauteil-Ensembles vorliegenden Vorform-Vorprodukts bezeichnet, die beispielsweise in einer Hüllrohr-Innenbohrung angeordnet sind. Sie werden im Wesentlichen durch thermisches Strecken zu Hohlkanälen in einem weiteren Vorprodukt oder zu der Vorform umgeformt, und sie bilden letztlich die Antiresonanzelemente in der Hohlkernfaser. Verschachtelte Antiresonanzelement-Vorformlinge bilden in der Hohlkernfaser verschachtelte Antiresonanzelemente. Sie setzen sich zusammen aus einem Primärrohr und mindestens einem weiteren Strukturelement, das in der Innenbohrung des Primärrohres angeordnet ist. Bei dem mindestens einen weiteren Strukturelement kann es sich um ein weiteres Rohr handeln, das an der Innenmantelfläche des Primärrohres anliegt. Das weitere Rohr wird hier als "Sekundärrohr" bezeichnet.

In der Innenbohrung des Sekundärrohres kann bei mehrfach verschachtelten Antiresonanzelement-Vorformlingen mindestens ein weiteres Strukturelement angeordnet sein, beispielsweise ein an der Innenmantelfläche des verschachtelten Sekundärrohres anliegendes, drittes Rohr, das hier als "Tertiärrohr" bezeichnet wird.

Ein vorkonfektionierter ARE-Vorformling ist ein selbsttragendes Gebilde, das ein Primärrohr und mindestens ein Sekundärrohr enthält, das mit der Primärrohr-Innenseite verbunden ist, so dass Primärrohr und Sekundärrohr in Form des Gebildes zusammen handhabbar sind.

*Thermisches Strecken / Kollabieren / Elongierverhältnis*

Das Vorprodukt wird unter Bildung der Vorform thermisch gestreckt (elongiert). Die Streckung kann ohne gleichzeitiges Kollabieren erfolgen. Auch der Faserziehprozess beruht auf einem thermischen Streckvorgang. Beim Faserziehprozess spricht man von einem "Verhältniszug", wenn die Querschnittsstruktur der Faser bereits in der Vorform angelegt ist. Der Faserziehprozess für Hohlkernfasern ist häufig kein Verhältniszug.

Beim Kollabieren wird eine Innenbohrung verengt oder Ringspalte zwischen rohrförmigen Bauteil werden geschlossen oder verengt. Das Kollabieren kann mit einem thermischen Strecken kombiniert werden.

*Ausziehverhältnis*

Verhältnis der Bauteil-Außendurchmesser vor und nach dem thermischen Strecken.

*Konnektierungsende der Vorform*

Anbindungsstelle für die Druckbeaufschlagung der Hohlkanäle der Querschnittsstruktur der Vorform.

*Querschnitt / Innenbohrung*

Der Begriff "Querschnitt" in Verbindung mit langestreckten Komponenten wie ARE-Vorformlingen, Vorform oder Hohlkernfaser bezeichnet stets den Querschnitt senkrecht zur jeweiligen Längsachse, und zwar - sofern nichts anderes angegeben - bei rohrförmigen Komponenten den Querschnitt der Außenkontur (nicht: den Querschnitt der Innenkontur).
Die Bezeichnung "Rohrinnenseite" wird auch als Synonym für "Rohr-Innenmantelfläche" und die Bezeichnung "Rohraußenseite" wird auch als Synonym für "Rohr-Außenmantelfäche" verwendet. Der Begriff "Innenbohrung" in Verbindung mit einem Rohr besagt nicht, dass die Innenbohrung durch einen Bohrvorgang erzeugt worden ist.

Ausführungsbeispiel

Nachfolgend wird die Erfindung anhand eines Ausführungsbeispiels und einer Zeichnung näher erläutert. Im Einzelnen zeigt in schematischer Darstellung

| | |
|---|---|
| **Figur 1** | ein loses Bauteil-Ensembles aus einem Primärrohr, zwei Sekundärrohren und einem Abstandshalter in einer Ansicht auf die Rohr-Stirnseiten, |
| **Figur 2** | einen Querschnitt eines vorkonfektionierten ARE-Vorformlings, erhalten aus dem Bauteil-Ensemble von Figur 1 durch thermisches Strecken, |
| **Figur 3** | einen Querschnitt einer primären Vorform mit einem Hüllrohr und fünf an der Hüllrohr-Innenseite angeordneten vorkonfektionierten ARE-Vorformlingen, |
| **Figur 4** | einen Querschnitt einer durch Weiterverarbeitung der primären Vorform von Figur 3 erzeugten ersten sekundären Vorform, |
| **Figur 5** | einen Querschnitt einer durch Weiterverarbeitung der ersten sekundären Vorform von Figur 4 erzeugten zweiten sekundären Vorform, und |
| **Figur 6** | einen Querschnitt einer durch Weiterverarbeitung der zweiten sekundären Vorform von Figur 54 erzeugten Hohlkernfaser mit einem ALIF-Design. |

*Herstellung eines Vorprodukts*

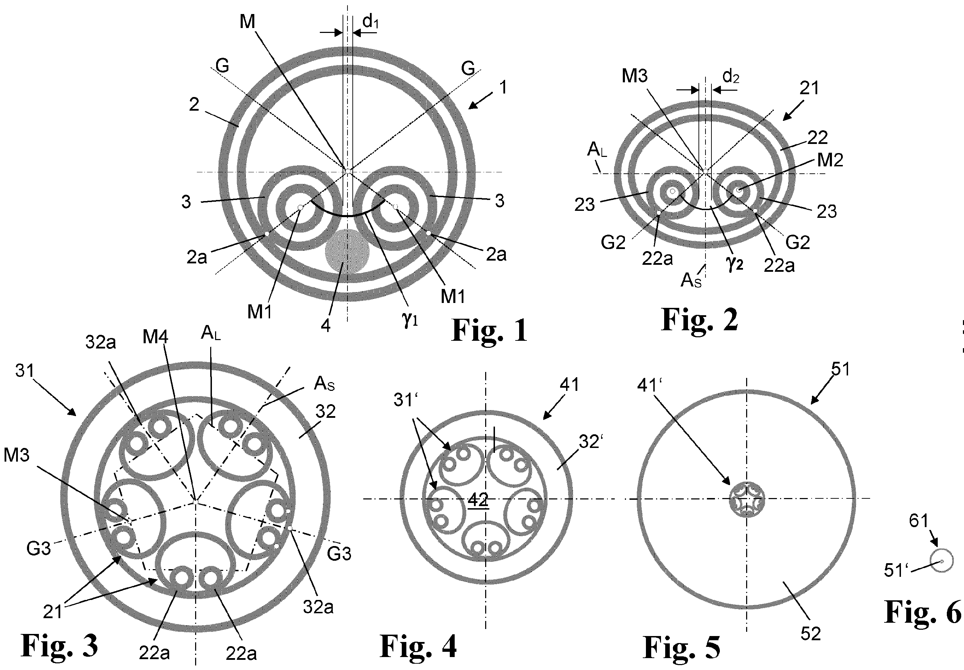

**Figur 1** zeigt im Querschnitt einen losen Zusammenbau 1 aus einem Primärrohr 2, zwei in der Primärrohr-Innenbohrung 2a angeordneten Sekundärrohren 3, und stabförmigen, kurzen Abstandshaltern 4, auf dem die Enden der Sekundärrohre 3 aufliegen. Die Rohre (2, 3) bestehen aus undotiertem Quarzglas und haben einen kreisrunden Innen- und Außenquerschnitt. Die Mittelachsen M des Primärrohres 1 und die beiden Mittelachsen M2 der Sekundärrohre 3 verlaufen parallel zueinander. Im Querschnitt liegen die beiden Sekundärrohre 3 jeweils an einer azimutalen Kontaktstelle 2a an der Primärrohr-Innenseite an. Die azimutalen Kontaktstellen 2a liegen jeweils auf Geraden G, die durch den Primärrohr-Mittelpunkt M und die jeweilige Sekundärrohr-Mittelpunkte M1 verlaufen. Die Geraden G schließen einen Winkel $\gamma 1$ miteinander ein. Die beiden elongierten Sekundärrohre 3 haben einen freien Abstand d1 voneinander. Um jegliche Gefahr der Berührung der Sekundärrohre 3 während des thermischer Streckprozesses auszuschließen, beträgt der freie Abstand d1 bevorzugt mindestens 1mm.
Die Enden der beiden Sekundärrohre 3 werden an der Innenseite des Primärrohres 2 lokal thermisch angebondet und dabei auch mit den Abstandshaltern 4 verschweißt. Danach wird der fixierte Zusammenbau 1 thermisch gestreckt, wobei ein vorgegebenes Elongierverhältnis eingestellt wird.
Resultat des Streckvorgangs ist ein vorkonfektionierter ARE-Vorformling 21 mit ovalem Querschnitt, wie ihn die Skizze von **Figur 2** anhand eines Beispiels zeigt. Das vormalige Primärrohr 2 bildet nun ein ovales elongiertes Primärrohr 22. Die beiden vormaligen Sekundärrohre 3 bilden elongierte Sekundärrohre 23, die über ihre gesamte Länge mit der Innenseite des elongierten Primärrohres 22 verschmolzen sind. Im gezeigten Querschnitt sind die Verschmelzungen als azimutale Kontaktstellen 22a erkennbar.

Die elongierten Sekundärrohre 23 haben weiterhin einen im Wesentlichen kreisrunden Querschnitt mit dem Mittelpunkt M2. Das elongierte Primärrohr 22 zeigt aber eine ausgeprägte Ovalität, die charakterisiert ist durch eine lange Hauptachse $A_L$ und eine kurze Hauptachse As, die sich im Mittelpunkt M3 schneiden. Die beiden elongierten Sekundärrohre 23 befinden sich in gleicher Distanz beiderseits der kurzen Hauptachse As und sie haben einen freien Abstand d2 voneinander. Die Geraden G2, die durch den Mittelpunkt M3 und durch die azimutalen Kontaktstellen 22a der Sekundärrohre 23 verlaufen, schließen einen Winkel $\gamma2$ miteinander ein. Der Abstand d2 und der Winkel $\gamma2$ hängen vom Ovalitätsgrad des elongierten Primärrohres 22 ab. Je größer dieser ist, umso größer ist die Verlängerung des Abstands d2 gegenüber dem Abstand d1 und umso weiter ist der Winkel y2 im Vergleich zum Winkel $\gamma1$. Die Winkel $\gamma2$ und Winkel $\gamma1$ sind im Ausführungsbeispiel spiegelsymmetrisch zur kurzen Hauptachse. Das heißt, die beiden Halbwinkel beiderseits der Achse sind jeweils gleich groß. Das ist jedoch keine obligatorische Symmetriebedingung.

Im Verlauf des thermischen Streckens des fixierten Zusammenbaus 1 verändert sich infolge der Verschmelzungen der elongierten Sekundärrohre 3 mit der Innenseite des Primärrohres 2 die periphere Wanddickenverteilung, was zu unsymmetrischen Wärmeeintrag und damit zu einem asymmetrischen Fließen des Glases und letztlich zur Ovalität des elongierten Primärrohres 22 führt.

Die vorkonfektionierten ovalen ARE-Vorformlinge 21 werden zur Herstellung eines Ensembles 31 (primäre Vorform) eingesetzt. Dabei werden fünf vorkonfektionierter ARE-Vorformling 21 in der Innenbohrung eines Hüllrohres 32 mit einem Außendurchmesser von 41mm angeordnet. Wie in der Querschnittsdarstellung von **Figur 3** zu erkennen, werden die vorkonfektionierten ARE-Vorformlinge 21 an peripheren Kontaktstellen 32a der Innenseite des Hüllrohres 32 gleichmäßig verteilt und dabei so orientiert, dass die kurzen Hauptachsen As jeweils radial zur Hüllrohr-Mittelachse M4 verlaufen. Für diesen Zweck kann eine Positionierungsschablone verwendet werden. Die beiden azimutalen Kontaktstellen 22a an der Innenseite eines jeden der elongierten Primärrohre 22 befinden sich beidseitig und im gleichen Abstand zu einer Geraden G3, die durch die Hüllrohr-Mittelachse M4 und durch die periphere Kontaktstelle 32a an der Innenseite des Hüllrohres 32 verläuft. Die Gerade G3 verläuft dabei gleichzeitig in der kurzen Hauptachse As des elongierten und oval verformten Primärrohres 22.

Im Bereich ihrer stirnseitigen Enden werden die ARE-Vorformlinge 21 an der Hüllrohr-Innenseite angeschmolzen und in einem ersten thermischen Streckvorgang zu einem Vorprodukt in Form einer Kernvorform 41 (cane) mit einem Außendurchmesser von 23mm elongiert.

**Figur 4** zeigt einen Querschnitt der Kernvorform 41 (cane), die durch thermisches Strecken des Ensembles 31 erhalten worden ist. Bei diesem Heißverformungsprozess verbinden sich die ursprünglichen vorkonfektionierten ARE-Vorformlinge 21' über ihre gesamte Länge mit der Innenseite des vormaligen Hüllrohres 32'. Die Kernvorform 41 zeigt eine Querschnittsstruktur mit einem hohlen Kernbereich 42, der von einem inneren Mantelbereich umgeben ist, der von den vormaligen ARE-Vorformlingen 31' gebildet wird, und einen äußeren Mantelbereich, der vom ehemaligen Hüllrohr 32' gebildet wird. In Tabelle 1 sind Abmessungen der Kernvorform 41 genannt.

Tabelle 1

| | |
|---|---|
| **Innendurchmesser [mm]** | 14 |
| **Wanddicke [mm]** | 4,8 |
| **Außendurchmesser [mm]** | 23,6 |
| **Länge [m]** | 1 |
| **CSA [m²]** | 0,00028 |

*Herstellung einer Vorform*

**Figur 5** zeigt eine Vorform 51, die durch thermisches Strecken der Kernvorform 41 bei gleichzeitigem Überfangen mit Mantelmaterial 52 erhalten worden ist und deren Außendurchmesser 25mm beträgt. Die vormalige Kernvorform ist mit der Bezugsziffer 41' bezeichnet. Die Vorform 51 zeigt bereits die Querschnittsstruktur der finalen Hohlkernfaser 61 (Figur 6), abgesehen von den Größen der Hohlkanäle. In Tabelle 2 sind weitere Daten der Vorform 51 (dort bezeichnet als "Vorform OD25") und zwei weiterer Ausführungsbeispiele für Vorformen gemäß der Erfindung zusammengefasst.

Tabelle 2

| | Vorform OD25 | Vorform OD35 | Vorform OD40 |
|---|---|---|---|
| **OD [m]** | 0,025 | 0,035 | 0,04 |
| **ID [m]** | 0,0058 | 0,0081 | 0,0093 |

(fortgesetzt)

| | Vorform OD25 | Vorform OD35 | Vorform OD40 |
|---|---|---|---|
| L [m] | 3 | 3,5 | 3,44 |
| L/OD | 120 | 100 | 86 |
| CSA [m$^2$] | 0,00046 | 0,00091 | 0,00119 |
| CSA/L [m] | 0,000155 | 0,000260 | 0,000346 |
| V [mm$^3$] | 1.392.977 | 3.185.275 | 4.089.039 |
| A [mm$^2$] | 235.619 | 384.845 | 432.283 |
| V/A [mm] | 5,9 | 8,3 | 9,5 |

Mit: OD = Außendurchmesser
ID = Innendurchmesser
L = Länge
V = Volumen
A = Außenoberfläche

*Herstellung einer Hohlkernfaser*

**Figur 6** zeigt schematisch eine Hohlkernfaser 61 mit ALIF-Design mit einem Außendurchmesser von 0,23mm, die durch Ziehen der Vorform 51 erzeugt wird. Dabei wird die Vorform bei vertikal orientierter Längsachse von oben kommend einer Heizzone zugeführt, die auf etwa 2000°C temperaturgeregelt ist. Die Vorform hat eine Länge von 3m. Sie wird dabei mit dem unteren Ende beginnend zonenweise erweicht.

Am oberen Ende des Vorform ist eine Anbindungsstelle für eine Druckbeaufschlagung installiert, über die dem hohlen Kernbereich sowie den Hohlkanälen der Querschnittsstruktur Gas zugeführt wird, so dass sich in den Hohlkanälen des inneren Mantelbereichs und im Hohlkern 42 (Fig. 4) ein Innenüberdruck einstellt. Die Druckbeaufschlagung erfolgt differenziell in dem Sinne, dass auf den Hohlkern 42 und auf die Hohlkanäle unterschiedliche Drücke ausgeübt werden.

Die Vorschubgeschwindigkeit zur Heizzone wird auf 3,2 mm/min eingestellt, so dass sich ein Materialdurchsatz von 3,3 g/min ergibt. Die mittlere Aufenthaltsdauer der Vorform in der Heizzone etwa 31min beträgt. Das Gesamt-Ausziehverhältnis von der Vorform zur Hohlkernfaser beträgt 109.

Der Faserziehprozess wird beendet, sobald am Konnektierungsende der Vorform 51 eine Temperatur von 50°C erreicht worden ist oder wenn die noch nicht thermisch gestreckte Restlänge der Vorform nur noch 0,5m lang ist, je nachdem welches dieser beiden Ereignisse früher eintritt.

**Patentansprüche**

1. Vorform für eine antiresonante Hohlkernfaser, die einen sich entlang einer Faser-Längsachse erstreckenden Hohlkern und einen den Hohlkern umgebenden und von Hohlkanälen durchzogenen Mantel aufweist, **dadurch gekennzeichnet, dass** die Vorform einen Außendurchmesser OD und eine Länge L aufweist, wobei OD mindestens 25mm beträgt, und das Verhältnis L/OD größer ist als 71,5.

2. Vorform nach Anspruch 1, **dadurch gekennzeichnet, dass** das Verhältnis L/OD im Bereich zwischen 80 und 200 und vorzugsweise im Bereich zwischen 90 und 150 liegt.

3. Vorform nach Anspruch 1 oder 2, **dadurch gekennzeichnet, dass** der Außendurchmesser OD im Bereich von 25 bis 50mm liegt, und vorzugsweise nicht größer ist als 45mm, und besonders bevorzugt kleiner als 30mm ist.

4. Vorform nach einem oder mehreren der vorhergehenden Ansprüche, **dadurch gekennzeichnet, dass** die Vorform-Länge L mindestens 3000mm und vorzugsweise mindestens 4000mm beträgt.

5. Vorform nach einem oder mehreren der vorhergehenden Ansprüche, **dadurch gekennzeichnet, dass** die Vorform ein Volumen V (in mm$^3$) und eine Außenoberfläche A (in mm$^2$) aufweist, und dass Verhältnis V/A kleiner ist als 12 (in mm).

6. Vorform nach einem oder mehreren der vorhergehenden Ansprüche, **dadurch gekennzeichnet, dass** die Vorform eine Masse von mindestens 3kg aufweist.

7. Verfahren zur Herstellung einer Vorform für eine antiresonante Hohlkernfaser nach einem der Anspruch 1 bis 6, umfassend ein thermisches Strecken eines zylinderförmigen Vorproduktes, das eine Länge von weniger als 3000mm aufweist.

8. Verfahren nach Anspruch 7, **dadurch gekennzeichnet, dass** das zylinderförmige Vorprodukt eine Länge von weniger als 2500mm, bevorzugt weniger als 2000mm, aufweist.

9. Verfahren nach Anspruch 7 oder 8, **dadurch gekennzeichnet, dass** das zylinderförmige Vorprodukt einen Außendurchmesser im Bereich von 40mm bis 200mm, vorzugsweise einen Außendurchmesser von mindestens 60mm, bevorzugt mindestens 70mm aufweist.

10. Verfahren zur Herstellung einer Hohlkernfaser durch thermisches Strecken einer Vorform, die einen hohlen Kernbereich und einen Mantelbereich aufweist, der von Hohlkanälen durchzogen ist, die sich zwischen einem ersten Vorform-Ende und einem zweiten Vorform-Ende erstrecken, wobei die Vorform mit dem ersten Ende beginnend einer Heizeinrichtung mit einer Vorschubgeschwindigkeit zugeführt, darin bereichsweise erweicht, und aus dem erweichten Bereich unter Verkürzung einer Vorform-Restlänge die Hohlkernfaser kontinuierlich abgezogen wird, wobei der Kernbereich und/oder die Hohlkanäle mit Druck beaufschlagt werden, **dadurch gekennzeichnet, dass** mindestens ein Mittel zur Druck-Beaufschlagung am zweiten Vorform-Ende angeordnet ist, und dass das thermische Strecken beendet wird, sobald das Mittel zur Druck-Beaufschlagung und/oder das zweite Vorform-Ende eine vorgegebene Grenztemperatur erreicht hat und/oder die Vorform-Restlänge eine vorgegebene Mindestlänge unterschritten hat.

11. Verfahren nach Anspruch 10, **dadurch gekennzeichnet, dass** die vorgegebene Grenztemperatur niedriger als 250°C, bevorzugt niedriger als 200°C ist.

12. Verfahren nach Anspruch 10 oder 11, **dadurch gekennzeichnet, dass** die Vorform-Restlänge mindestens 300mm, vorzugsweise mindestens 400mm beträgt.

13. Verfahren nach einem oder mehreren der Ansprüche 10 bis 12, **dadurch gekennzeichnet, dass** die Vorschubgeschwindigkeit so eingestellt wird, dass sich ein Durchsatz von mindestens 0,8 g/min, bevorzugt ein Durchsatz im Bereich von 0,8 g/min bis 150 g/min, und besonders bevorzugt ein Durchsatz im Bereich von 3,3 g/min bis 85 g/min ergeben.

14. Verfahren nach einem oder mehreren der Ansprüche 10 bis 13, **dadurch gekennzeichnet, dass** die Vorschubgeschwindigkeit so eingestellt wird, dass die mittlere Aufenthaltsdauer der Vorform in der Heizzone weniger als 25 min, bevorzugt im Bereich von 1,5 bis 25 min beträgt.

15. Verfahren nach einem oder mehreren der Ansprüche 10 bis 14, **dadurch gekennzeichnet, dass** das Gesamt-Ausziehverhältnis im Bereich von100 bis 200, vorzugsweise auf einen Wert im Bereich von 120 bis 180 eingestellt wird.

Fig. 1

Fig. 2

Fig. 3

Fig. 4

Fig. 5

Fig. 6

Europäisches
Patentamt

European
Patent Office

Office européen
des brevets

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EP 3 766 844 A1 (HERAEUS QUARZGLAS [DE]) 20. Januar 2021 (2021-01-20) * Absätze [0068] - [0078]; Abbildungen; Beispiele 5,6 * ----- | 1-15 | INV. C03B37/012 C03B37/025 C03B37/027 |
| X | US 2019/135679 A1 (JAKOBSEN CHRISTIAN [DK] ET AL) 9. Mai 2019 (2019-05-09) * Absätze [0071], [0104] - [0109]; Ansprüche 1,4,27,28; Abbildungen * ----- | 10-15 | |

RECHERCHIERTE SACHGEBIETE (IPC)

C03B

Der vorliegende Recherchenbericht wurde für alle Patentansprüche erstellt

| Recherchenort | Abschlußdatum der Recherche | Prüfer |
|---|---|---|
| Den Haag | 22. November 2024 | Creux, Sophie |

EPO FORM 1503 03.82 (P04C03)

**EP 4 660 160 A1**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-11-2024

| Im Recherchenbericht angeführtes Patentdokument | Datum der Veröffentlichung | Mitglied(er) der Patentfamilie | | Datum der Veröffentlichung |
|---|---|---|---|---|
| EP 3766844 A1 | 20-01-2021 | CN | 113939483 A | 14-01-2022 |
| | | EP | 3766844 A1 | 20-01-2021 |
| | | JP | 7453259 B2 | 19-03-2024 |
| | | JP | 2022540321 A | 15-09-2022 |
| | | US | 2022363584 A1 | 17-11-2022 |
| | | WO | 2021009218 A1 | 21-01-2021 |
| US 2019135679 A1 | 09-05-2019 | CN | 109476526 A | 15-03-2019 |
| | | EP | 3448818 A1 | 06-03-2019 |
| | | US | 2019135679 A1 | 09-05-2019 |
| | | WO | 2017186246 A1 | 02-11-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2024015191 A1

- EP 3766844 A1